# EUROPÄISCHE PATENTSCHRIFT

(11) **EP 2 315 052 B1**
(45) Veröffentlichungstag und Bekanntmachung des Hinweises auf die Patenterteilung: **29.02.2012**
(21) Anmeldenummer: 09173842.7
(22) Anmeldetag: 22.10.2009
(51) Int. Cl.: G01S 17/02, G01S 17/42, G01S 17/87, F16P 3/14, G05B 9/02, G01V 8/18

(54) **Sicherheitsscanner**
Safety scanner
Scanner de sécurité

(43) Veröffentlichungstag der Anmeldung: 27.04.2011
(73) Patentinhaber: SICK AG, 79183 Waldkirch (DE)
(72) Erfinder: Erb, Frank, 79211 Denzlingen (DE); Wagner, Daniel, 79292 Pfaffenweiler (DE)
(74) Vertreter: Hehl, Ulrich

(56) Entgegenhaltungen:
- EP-A2- 1 443 343
- DE-A1- 4 411 448
- DE-A1-102004 043 514
- DE-A1-102007 007 576

## Beschreibung

Die Erfindung betrifft einen Sicherheitsscanner und ein Verfahren zur Absicherung eines Überwachungsbereichs nach dem Oberbegriff von Anspruch 1 beziehungsweise 11.

Zur Überwachung von Arbeitsbereichen werden häufig Sicherheitslaserscanner eingesetzt, wie sie beispielsweise aus DE 43 40 756 A1 bekannt sind. Ein von einem Laser erzeugter Lichtstrahl überstreicht mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes aus der Lichtlaufzeit unter Verwendung der Lichtgeschwindigkeit zusätzlich auf die Entfernung des Objektes von dem Laserscanner geschlossen. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren, wie sie in der Sicherheitstechnik bevorzugt eingesetzt werden, misst der Laserscanner die Laufzeit, bis ein ausgesandter Lichtpuls wieder empfangen wird.

Mit den Winkel- und Entfernungsangaben lässt sich der Ort eines Objektes in dem Überwachungsbereich ermitteln, und damit können innerhalb des Überwachungsbereichs zweidimensionale Schutzfelder definiert werden. Befindet sich in einem Schutzfeld ein Objekt, so kann von der Auswerteeinheit des Scanners ein entsprechendes Warn- oder Stoppsignal ausgegeben werden.

Eine wichtige sicherheitstechnische Anwendung ist die Absicherung von Maschinen, die eine Gefahrenquelle bilden. Der Laserscanner überwacht dabei ein Schutzfeld, das während des Betriebs der Maschine von Bedienpersonal nicht betreten werden darf. Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

In industriellen Produktionsanlagen gibt es zunehmend kooperative Arbeitsplätze, etwa Roboterstationen, in denen Mensch und Maschine gemeinsam tätig sind. Dadurch erhöht sich der Anspruch an die sicherheitstechnische Überwachung, weil immer mehr Bereiche entstehen, in denen sich Mensch und Maschine gemeinsam aufhalten.

Ein Beispiel für einen gemeinsam von Mensch und Maschine genutzten Bereich bilden Fahrstraßenübergänge in den Produktionsanlagen von Autoherstellern. An diesen Übergängen werden Autos auf höhenverstellbaren Plattformen über ein fördersystem beispielsweise horizontal verschoben, und in vertikaler Richtung überquert Bedienpersonal, auch in Fahrzeugen oder Gabelstaplern, diesen Gefahrenbereich. Deshalb besteht die Gefahr, dass das Fördersystem und die sich automatisch bewegenden Plattformen Menschen verletzt.

Eine sehr einfache und in der Praxis nicht mehr zugelassene Absicherung bilden zwei Ampeln an beiden Seiten des Überfahrwegs, die durch rotes Licht das Betreten des Gefahrenbereichs untersagen und entsprechend mit grünem Licht das Überqueren gestatten. Zusätzlich zu den Ampeln können auch mechanische Schranken vorgesehen sein. Einen Nothalt des Fördersystems oder andere zusätzliche Sicherheitsmaßnahmen gibt es in diesen Fällen nicht.

In besser abgesicherten Anwendungen werden zwei Laserscanner mit umschaltbaren Schutzfeldkonfigurationen eingesetzt. Beispielsweise wird bei roter Ampel je ein Schutzfeld vor und nach dem Übergang angeordnet, um zu überwachen, dass keine Person trotz roter Ampel den Übergang betritt. Bei grüner Ampel dagegen werden die Schutzfelder seitlich platziert, um den Übergang freizugeben, zugleich aber zu verhindern, dass Personen in den Bereich des Förderers hineintreten. Die Einrichtung der Schutzfelder erfordert einen hohen Konfigurations- und Testaufwand. Dabei sind zudem zusätzliche Sensorik und Sicherheitssteuerungen erforderlich, um die Schutzfeldkonfiguration umzuschalten. Auch wird relativ viel Fläche vor dem Übergang für die Wam- und Schutzfelder benötigt.

Aus der DE 44 11 448 A1 ist ein Sicherheitsscanner bekannt, der in einem senkrechten Schutzfeld an einem Tor die Abstandskontur eines durchfahrenden Objekts mit einer Referenzkontur vergleicht, um danach zu entscheiden, ob es sich um ein zulässiges Objekt, welches das Tor passieren darf oder um ein unzulässiges Objekt handelt, weiches einen Nothalt auslöst. Die Unterscheidung beruht dabei allein auf der mittels jeweiligem Einzelscan bestimmten Kontur und ist damit nur begrenzt zuverlässig und flexibel.

Die DE 10 2007 007 576 A1 beschreibt eine Vorrichtung und ein Verfahren zum Sichern eines Arbeitsraums, bei dem dreidimensionale Bilder eines Arbeitsraums eines oder mehrerer Sensoren, die als 3D-Scanner ausgebildet sein können, analysiert werden. Dabei wird anhand eines Robotermodells geprüft, ob in dem Arbeitsraum andere Bewegungen, insbesondere von Personen, als die Sollbewegung des Roboters erkannt werden, und gegebenenfalls ein entsprechendes Signal erzeugt.

Es ist daher Aufgabe der Erfindung, die Gefahrenabsicherung mit einem Scanner für Anwendungen an kooperativen Arbeitsplätzen zu verbessern.

Diese Aufgabe wird durch einen Sicherheitsscanner nach Anspruch 1 und ein Verfahren zur Absicherung eines Überwachungsbereichs nach Anspruch 11 gelöst.

Dabei geht die Erfindung von dem Grundgedanken aus, Vorwissen über erwartete Schutzfeldeingriffe auszunutzen. Kann ein Eingriff einem bekannten Objekt zugeordnet werden, so wird die Sicherheitsfunktion unterdrückt. Dieses Objekt wird als Gefährdungsobjekt bezeichnet, weil es zwar einen erlaubten Eingriff darstellt, zugleich aber ein Kontakt mit Bedienpersonal unterbunden werden muss, beispielsweise weil das Gefährdungsobjekt ein Roboterarm, ein Werkzeug oder Teil eines Fördersystems ist, dessen Bewegung Bedienpersonal verletzen könnte. Die Erfindung umfasst aber gleichermaßen auch Objekte, von denen keine Gefahr ausgeht. Das Gefährdungsobjekt wird verfolgt oder erkannt (Objektverfolgung, Objekttracking, Objekterkennung), solange es sich im Schutzfeld befindet. Nur Eingriffe, die sich nicht auf das verfolgte beziehungsweise erkannte Gefährdungsobjekt zurückführen lassen, führen zu einer durch das Absicherungssignal ausgelösten sicherheitsgerichteten Reaktion, beispielsweise einem Nothalt. Das Gefährdungsobjekt wird demnach zur verbesserten Absicherung an kooperativen Arbeitsplätzen intelligent aus dem Schutzfeld ausgeblendet.

Die Erfindung hat den Vorteil, dass keine zusätzliche Sensorik oder Steuerungsinformation erforderlich ist. Der Sicherheitsscanner, je nach Abschattungen in der Anwendung auch ein Verbund mehrerer Sicherheitsscanner, erzeugt selbst alle notwendigen Informationen, um das Schutzfeld anzupassen. Der Konfigurations- und Testaufwand in der Anwendung ist erheblich reduziert. Der Sicherheitsscanner kann auch selbst Ampeln, Schranken oder ähnliche Systeme ansteuern und deren Zustand an eine übergeordnete Prozesssteuerung weitergeben, so dass entsprechender Steuerungs- und Sensorikaufwand entfällt.

Wegen der Winkel- und Entfernungsauflösung lassen sich bei einem Sicherheitsscanner weitgehend beliebig geformte, auch mehrteilige zweidimensionale Schutzfelder definieren. Häufig wird dennoch einheitlich nur von einem Schutzfeld gesprochen. Eine ähnliche sprachliche Vereinfachung gilt für das Gefährdungsobjekt, obwohl durchaus mehrere Gefährdungsobjekte in gleicher Weise ausgeblendet und auch eine ganze Bibliothek möglicher Gefährdungsobjekte vorgesehen sein kann.

Die Auswertungseinheit ist bevorzugt dafür ausgebildet, das Schutzfeld während der Bewegung des Gefährdungsobjekts in dem Schutzfeld dynamisch anzupassen, insbesondere derart, dass das Gefährdungsobjekt stets in allen Richtungen mit einem die Sicherheit gewährleistenden Schutzfeld umgeben ist. Diese dynamische Anpassung umfasst einerseits die Ausblendung des Gefährdungsobjekts. Andererseits kann auch je nach Zustand des Gefährdungsobjekts, also in erster Linie dessen Position und Geschwindigkeit, das Schutzfeld in seiner Form und Lage verändert werden, um weiterhin jeden Kontakt zwischen Bedienpersonal zu Gefahrenquelle zu unterbinden. Dabei können auch Gegebenheiten der Anlage, etwa Wände oder sonst unzugängliche Bereiche, dynamisch berücksichtigt werden. Es ist demnach nicht erforderlich, dass das Gefährdungsobjekt stets vollständig in allen Richtungen von einem Schutzfeld umgeben ist, solange offene, nicht von einem Schutzfeld abgesicherte Richtungen, Personen keinerlei Eingriffsmöglichkeit bieten.

Die Auswertungseinheit ist bevorzugt dafür ausgebildet, das Schutzfeld in einer Gegenrichtung zu der Bewegungsrichtung des Gefährdungsobjekts dynamisch zu verkleinern. Gerade bei bekannter Bewegungsbahn des Gefährdungsobjekts ist nach dessen Vorbeibewegung die Absicherung nicht mehr oder nur noch mit kleineren Sicherheitsabständen erforderlich. Durch entsprechende dynamische Anpassung des Schutzfeldes wird beispielsweise das sichere rückseitige Überqueren hinter dem Gefährdungsobjekt ermöglicht.

Die Auswertungseinheit ist bevorzugt dafür ausgebildet, zwischen mehreren Schutzfeldkonfigurationen umzuschalten, die jeweils die Grenzen des Schutzfeldes innerhalb des Überwachungsbereichs festlegen. Es gibt also beispielsweise mehrere Arbeitsschritte an der Anlage, die jeweils unterschiedliche Absicherungen erfordern. Durch die Umschaltung der Schutzfeldkonfiguration wird eine optimale Anpassung an diese wechselnden Anforderungen ermöglicht.

Besonders bevorzugt ist die Auswertungseinheit dafür ausgebildet, eine Umschaltung der Schutzfeldkonfiguration vorzunehmen, wenn das Gefährdungsobjekt in das Schutzfeld eintritt und/oder das Schutzfeld verlässt, wobei insbesondere die Schutzfeldkonfiguration vor dem Eintreten und nach dem Austreten des Gefährdungsobjekts dieselbe ist. Während der Objektverfolgung beziehungsweise Objekterkennung des Gefährdungsobjekts in dem Schutzfeld wird somit eine angepasste Schutzfeldkonfiguration verwendet, die ausschließlich das Gefährdungsobjekt in einem bestimmten Bereich zulässt, der in Abwesenheit des Gefährdungsobjekts frei zugänglich sein kann.

Die Auswertungseinheit ist bevorzugt dafür ausgebildet, das Gefähfdungsobjekt in dem Schutzfeld anhand von Kontur, Trajektorie innerhalb des Schutzfeldes und/oder dem Ort des Eindringens oder Verlassens des Schutzfeldes zu erkennen. Somit wird anhand von Vorwissen über das Gefährdungsobjekt ein Objektmodell erstellt, welches die Objektverfolgung beziehungsweise Objekterkennung erheblich erleichtert und für das Auffinden des Gefährdungsobjekts in den Scannerdaten sehr gute Ausgangshypothesen oder Anfangsbedingungen vorgibt. Die Objektverfolgung wird damit einfacher und zuverlässiger.

Vorteilhafterweise ist die Auswertungseinheit dafür ausgebildet, in dem Überwachungsbereich mindestens einen der folgenden Teilbereiche vorzusehen:
- ein dem Schutzfeld vorgelagertes Warnfeld, in dem vor einer Absicherung zunächst eine Warnung erfolgt,
- einen Freibereich, in dem jegliche Eingriffe erlaubt sind und/oder
- einen Eintritts- und einen Austrittsbereich, in dem das Gefährdungsobjekt in das Schutzfeld eindringt oder das Schutzfeld verlässt.
Warnfelder erhöhen die Verfügbarkeit, weil möglicherweise Bedienpersonal noch rechtzeitig von einer Schutzfeldverletzung abgehalten wird. In vielen Anwendungen ist bekannt, wo das Gefährdungsobjekt in den Sichtbereich des Scanners kommt und wo es ihn verlässt und diese Bereiche erleichtern die Objektverfolgung beziehungsweise Objekterkennung und die Schutzfeldanpassungen. Es gibt darüber hinaus noch die Möglichkeit, dass ein oder mehrere simultan überwachte Schutzfelder sich je nach Konfiguration darin unterscheiden, ob ein Reset der Sicherheitsfunktion erforderlich ist, die üblicherweise einer besonderen Autorisierung bedarf, oder ob ein automatisches Wiederanlaufen möglich ist.

Erfindungsgemäß ist eine Anordnung mindestens zweier Sicherheitsscanner vorgesehen, wobei in der Auswertungseinheit eines der Sicherheitsscanner oder in einer übergeordneten Auswertungseinheit die aus den Empfangssignalen der Sicherheitsscanner gewonnenen Objektinformationen in ein gemeinsames Koordinatensystem umrechenbar sind. Laserscanner gewinnen prinzipbedingt im Schatten von Objekten keine Daten. Das gilt auch für Bereiche, die von dem Gefährdungsobjekt abgeschattet werden. Durch Zusammensetzen der Daten mehrerer Laserscanner und Auswertung in einem gemeinsamen Koordinatensystem entsteht praktisch ein Laserscanner ohne Abschattungsproblem. Dazu können je nach Anwendung auch mehr als zwei Laserscanner erforderlich sein.

Die Sicherheitsscanner der Anordnung überwachen bevorzugt dieselbe Scanebene, insbesondere eine horizontale Scanebene in Höhe einer Transportplattform oder von deren Sockel. So entstehen bei der Umrechnung in ein gemeinsames Koordinatensystem keine Schwierigkeiten.

Die Sicherheitsscanner werden an einer Kreuzung eines Förderers und eines Übergangs angeordnet, wobei in einer ersten Schutzfeldkonfiguration das Schutzfeld an dem Eintrittsort und dem Austrittsort des Förderers vorgesehen ist, welches einen Freibereich für den Übergang offen lässt, und in einer zweiten Schutzfeldkonfiguration das Schutzfeld den Übergang absichert. In der ersten Schutzfeldkonfiguration kann Bedienpersonal zu Fuß oder in einem Fahrzeug passieren.

Vorteilhafterweise umfasst in der zweiten Schutzfeldkonfiguration das Schutzfeld den gesamten Übergang, oder das Schutzfeld lässt dynamisch mit fortschreitender Bewegung des Gefährdungsobjekts den Freibereich hinter dem Gefährdungsobjekt zunehmend wieder offen. In dieser Situation bewegt der Förderer Objekte über die Kreuzung und deshalb muss bei Eingriffen von Bedienpersonal der Förderer angehalten oder auf andere Weise abgesichert werden. Die Schutzfelder umfassen bevorzugt den Übergang und Sicherheitszuschüsse.

Das Gefährdungsobjekt ist bevorzugt ein Fördererelement oder ein von dem Förderer bewegtes Objekt, wobei die Auswertungseinheit im Grundzustand die erste Schutzfeldkonfiguration verwendet, auf die zweite Schutzfeldkonfiguration umschaltet, wenn das Gefährdungsobjekt sich der Kreuzung nähert und auf die erste Schutzfeldkonfiguration zurückschaltet, wenn das Gefährdungsobjekt die Kreuzung verlassen hat. Fördererelement können Paletten, Plattformen, Schalen, Haken, fahrerlose Transportfahrzeuge oder dergleichen sein, welche Maschinenteile, Automobile oder andere Objekte transportieren.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung durch einen erfindungsgemäßen La- serscanner;
- Fig. 2a-d: schematische Draufsichten auf die Schutz- und Wamfeldkonfiguration an der Kreuzung eines Fördersystems mit einem Übergang in verschiedenen Stadien der Bewegung des Förderers;
- Fig. 3a-d: eine Darstellung gemäß den Figuren 2a-d bei einer alternativen Schutz- und Wamfeldkonftguration;
- Fig. 4: ein Blockschaltbild einer übergeordneten Steuerung für eine Ausführungs- form der Erfindung mit einer Anordnung mehrerer Laserscanner;
- Fig. 5: einen Zustandsautomaten für die Schutz- und Warnfeldauswertung bei der Ausführungsform der Erfindung gemäß Figur 2; und
- Fig. 6: einen Zustandsautomaten für die Schutz- und Warnfeldauswertung bei einer der Ausführungsformen der Erfindung gemäß Figur 3.

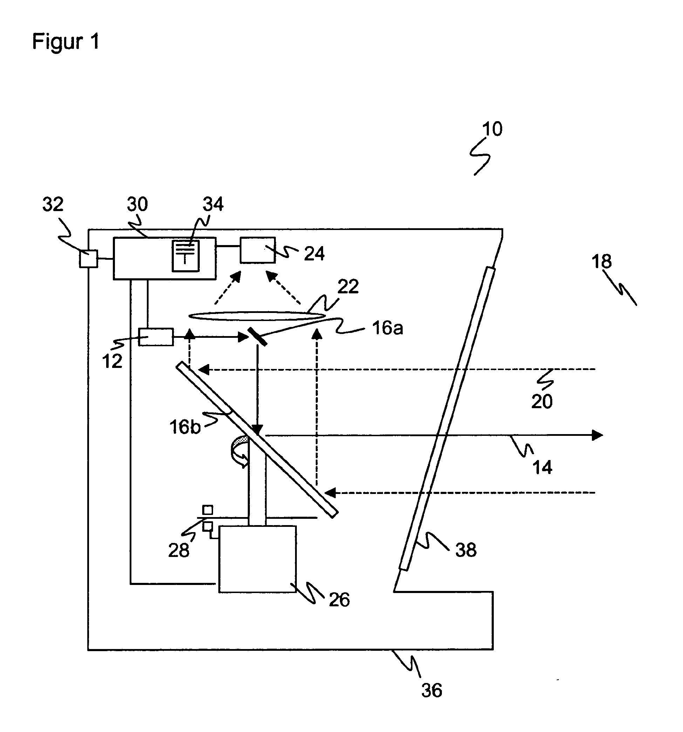

Fig. 1 zeigt eine schematische Schnittdarstellung durch einen erfindungsgemäßen Sicherheitsscanner 10. Ein von einem Lichtsender 12, beispielsweise einem Laser, erzeugter Lichtstrahl 14, der einzelne Lichtimpulsen aufweist, wird über Lichtablenkeinheiten 16a-b in einen Überwachungsbereich 18 gelenkt und dort von einem gegebenenfalls vorhandenen Objekt remittiert. Das remittierte Licht 20 gelangt wieder zu dem Sicherheitsscanner 10 zurück und wird dort über die Ablenkeinheit 16b und mittels einer Empfangsoptik 22 von einem Lichtempfänger 24 detektiert, beispielsweise einer Photodiode.

Die Lichtablenkeinheit 16b ist in der Regel als Drehspiegel ausgestaltet, die durch Antrieb eines Motors 26 kontinuierlich rotiert. Die jeweilige Winkelstellung der Lichtablenkeinheit 16b wird über einen Encoder 28 erfasst. Der von dem Lichtsender 12 erzeugte Lichtstrahl 14 überstreicht somit den durch die Rotationsbewegung erzeugten Überwachungsbereich 18. Wird ein von dem Lichtempfänger 24 empfangenes reflektiertes Lichtsignal 20 aus dem Überwachungsbereich 18 empfangen, so kann aus der Winkelstellung der Ablenkeinheit 16b mittels des Encoders 28 auf die Winkellage des Objektes in dem Überwachungsbereich 18 geschlossen werden.

Zusätzlich wird die Laufzeit der einzelnen Laserlichtpulse von ihrem Aussenden bis zu dem Empfang nach Reflexion an dem Objekt in dem Überwachungsbereich 18 ermittelt. Aus der Lichtlaufzeit wird unter Verwendung der Lichtgeschwindigkeit auf die Entfernung des Objektes von dem Sicherheitsscanner 10 geschlossen. Diese Auswertung erfolgt in einer Auswerteeinheit 30, die dafür mit dem Lichtsender 12, dem Lichtempfänger 24, dem Motor 26 und dem Encoder 28 verbunden ist. Somit stehen über den Winkel und die Entfernung zweidimensionale Polarkoordinaten aller Objekte in dem Überwachungsbereich 18 zur Verfügung.

Das eigentliche Ziel der Auswertung ist, ein Sicherheitssignal an einem Sicherheitsausgang 32 (OSSD, Output Signal Switching Device) bereitzustellen, beispielsweise um einen Nothalt einer angeschlossenen Maschine auszulösen. Über die Winkel- und Entfernungsdaten berechnet die Auswerteeinheit 30 hierzu den Ort eines Objektes in dem Überwachungsbereich 18. Dies wird mit einem zweidimensionalen Schutzfeld verglichen, dessen Geometrie durch entsprechende Parameter in einem Speicher 34 der Auswertungseinheit 30 abgelegt ist. Damit erkennt die Auswertungseinheit 30, ob das Schutzfeld verletzt ist, also ob sich ein unzulässiges Objekt darin befindet und schaltet je nach Ergebnis den Sicherheitsausgang 32. Weiter unten wird erläutert, weiche Eingriffe als zulässig und welche als unzulässig klassifiziert werden. Je nach Ausführungsform ist denkbar, die Auswertung oder Teile der Auswertung statt in einer internen Auswertungseinheit 30 in einer übergeordneten Steuerung vorzunehmen, wie ebenfalls im Folgenden noch beschrieben.

Alle genannten Funktionskomponenten sind in einem Gehäuse 36 angeordnet, das frontseitig, also im Bereich des Lichtaus- und Lichteintritts, eine Frontscheibe 38 aufweist. Die Frontscheibe 38 ist zur Vermeidung von direkten Reflexionen in den Lichtempfänger 24 schräg gestellt, so dass Lichtstrahl 14 und Frontscheibe 38 einen Winkel ungleich neunzig Grad einschließen.

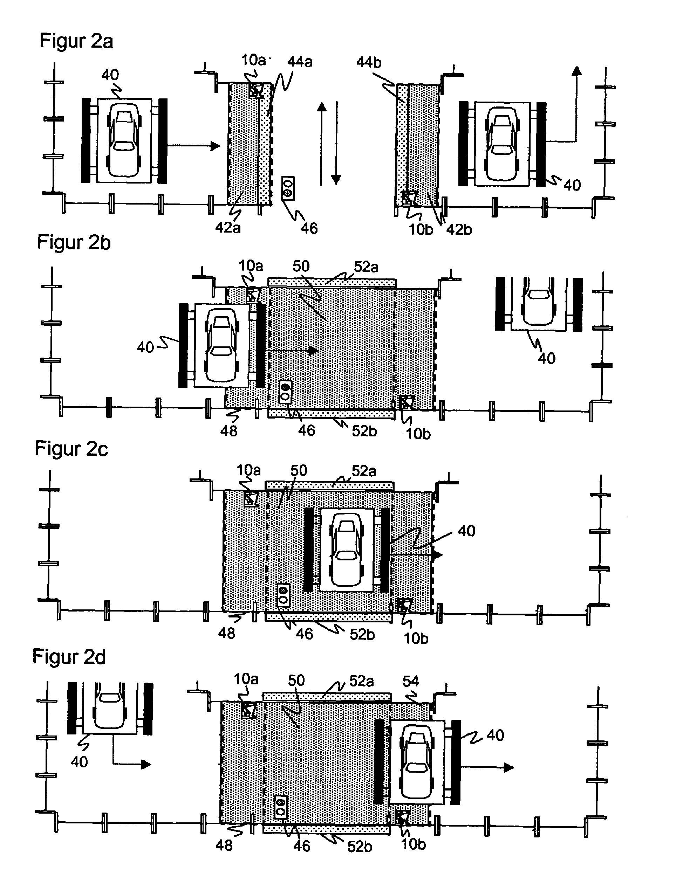

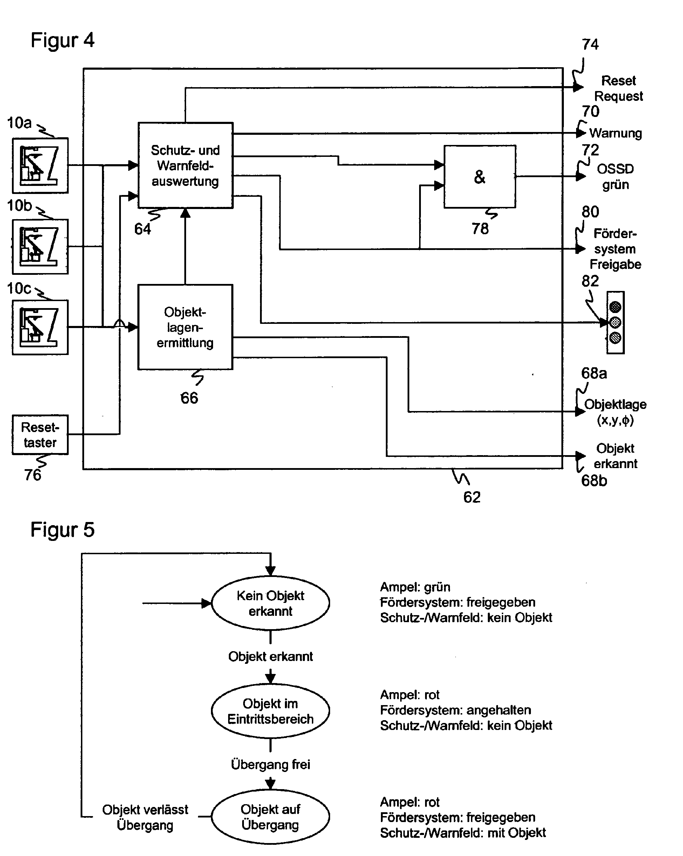

Figur 2a zeigt eine Anordnung zweier diagonal gegenüber angeordneter Sicherheitsscanner 10a-b an einem Gefahrenbereich, wo sich ein vertikal dargestellter Übergang für Bedienpersonal mit einem in der Darstellung horizontal bewegten automatischen Fördersystem kreuzt. Die Scanebenen der Sicherheitsscanner 10a-b liegen in einer zumindest annähernd gemeinsamen horizontalen Ebene in der Höhe von Plattformen 40 des Fördersystems oder in der Höhe von deren Faltenbalken. Die beiden Sicherheitsscanner 10a-b sind zur gemeinsamen Auswertung an eine übergeordnete sichere Steuerung angeschlossen, an die sie ihre Daten sicher übertragen und die im Zusammenhang mit Figur 4 weiter unten näher erläutert wird.

Die Sicherheitsscanner 10a-b verwenden in der in Figur 2a gezeigten Ausgangssituation, bei der sich keine Plattform 40 in dem Gefahrenbereich aufhält, jeweils ein Schutzfeld 42a-b, welches verhindert, dass Bedienpersonal in den Bereich des Fördersystems eindringt. Den Schutzfeldern 42a-b ist jeweils ein Wamfeld 44a-b vorgelagert. Die Kreuzung selbst ist frei, da zu diesem Zeitpunkt keine Gefährdung von Bedienpersonal besteht. Das zeigt auch die Ampel 46 mit grünem Licht an, wobei in der Praxis je eine Ampel zu beiden Seiten der Kreuzung angeordnet ist oder auch andere Anzeigemittel für das Bedienpersonal einschließlich mechanischer Schranken vorgesehen sein können, die in dieser Situation geöffnet wären.

Zu einem späteren, in Figur 2b gezeigten Zeitpunkt hat sich die Plattform 40 in einen Eintrittsbereich 48 der Kreuzung bewegt. Die Sicherheitsscanner 10a-b erkennen die Plattform 40 an einem Objektmodell, welches neben der Kontur der Plattform 40 oder des darauf befindlichen Objekts auch den Eintrittsort oder das weitere Bewegungsmuster beschreiben kann. In diesem Fall würde beispielsweise schon genügen, dass die Plattform in der Darstellung von links her in das Schutzfeld 42a der Figur 2a eingedrungen ist. Es ist ausgeschlossen, dass es sich dann um etwas anderes handelt als die Plattform 40, weil der linke Bereich für Personen unzugänglich ist. Je genauer aber das Objektmodell ist und je mehr Parameter es umfasst, desto eindeutiger ist die Zuordnung.

Wegen der in dem Eintrittsbereich 48 erkannten Plattform 40 ist bei der Situation der Figur 2b die Schutzfeldkonfiguration umgeschaltet worden. Ein Schutzfeld 50 schützt jetzt die gesamte Kreuzung und verhindert, dass Personen die Kreuzung betreten. Entsprechend ist die Ampel rot geschaltet. Warnfelder 52a-b verhindern schon die Annäherung an die Kreuzung. Die Plattform 40 befindet sich somit in dem Schutzfeld 50 und stellt damit eigentlich eine Schutzfeldverletzung dar. Die bekannte Plattform 40 wird aber in der Auswertung berücksichtigt, und Eingriffe, die der Plattform 40 zugeordnet werden können, werden nicht als sicherheitskritisch eingestuft. Anders ausgedrückt wird eine Umgebung der Plattform 40 effektiv aus dem Schutzfeld 50 ausgeblendet.

Dieser ausgeblendete Umgebungsbereich der Plattform 40 wandert mit der Plattform 40 mit, deren Orientierung, Position und/oder Geschwindigkeit während der gesamten relevanten Verweildauer in dem Überwachungsbereich 18 der Sicherheitsscanner 10a-b durch Objektverfolgung bekannt ist. Wegen der bekannten Position der Plattform 40 in einem vorhergehenden Auswertungszyklus, möglicherweise noch unterstützt durch die bekannte geplante Bewegung oder Steuerungsdaten des Fördersystems, gibt es stets eine recht zuverlässige Ausgangsposition für die Suche nach der Plattform 40 in den Scannerdaten. Das Objektmodell der Plattform 40, insbesondere deren Kontur oder der Schnitt der 3D-Kontur mit der Scanebene, wird mit diesen Anfangsbedingungen in die Scannerdaten gefittet, beispielsweise mit bekannten Algorithmen wie ICP (iterative closest point), vereinfacht nur mit einer bounding box oder dergleichen. Schutzfeldeingriffe, die sich dabei sicher der Plattform 40 zuordnen lassen, werden als nicht sicherheitskritisch bewertet und führen zu keiner sicherheitsgerichteten Abschaltung.

Figur 2c zeigt eine Situation, in der die Plattform 40 beinahe das gegenüberliegende Ende der Kreuzung erreicht hat. Die Schutzfeldkonfiguration bleibt dabei in diesem Ausführungsbeispiel unverändert, und auch die Ampel zeigt weiterhin rot. In Figur 2d hat sich die Plattform 40 in einen Austrittsbereich 54 bewegt, aber die Kreuzung immer noch nicht ganz verlassen. Deshalb ist das Schutzfeld 50 über der Kreuzung weiterhin aktiv und die Ampel rot. Sobald die Plattform 40 in voller Breite in dem Austrittsbereich 54 angekommen ist, oder je nach Ausführungsform auch erst, wenn sie ihn wieder verlassen hat, wird die Ampel grün geschaltet und die Ausgangssituation der Figur 2a wiederhergestellt.

Jeglicher Eingriff in das Schutzfeld 50, der nicht der Plattform 40 zugeordnet werden kann, führt dazu, dass das Fördersystem und damit die Plattform 40 in ihrer Bewegung angehalten wird. Je nach Ort des Eintritts und Austritts der Schutzfeldverletzung kann das Fördersystem dann, wenn das Schutzfeld nicht mehr verletzt ist, automatisch wieder anlaufen oder das Rücksetzen der Sicherheitsfunktion durch Bedienpersonal verlangen. Beispielsweise können Verletzungen der seitlichen Schutzfelder 42a-b, also ein Hintertreten in den Bereich des Förderersystems und damit ein Verlassen der Kreuzung, einen manuellen Reset erfordern, dagegen sonstige Verletzungen ein automatisches Wiederanfahren erlauben. Natürlich sind auch zusätzliche Ausnahmen denkbar, etwa statische Objekte auf der Kreuzung, die vorab eingelemt und im Betrieb ignoriert werden können.

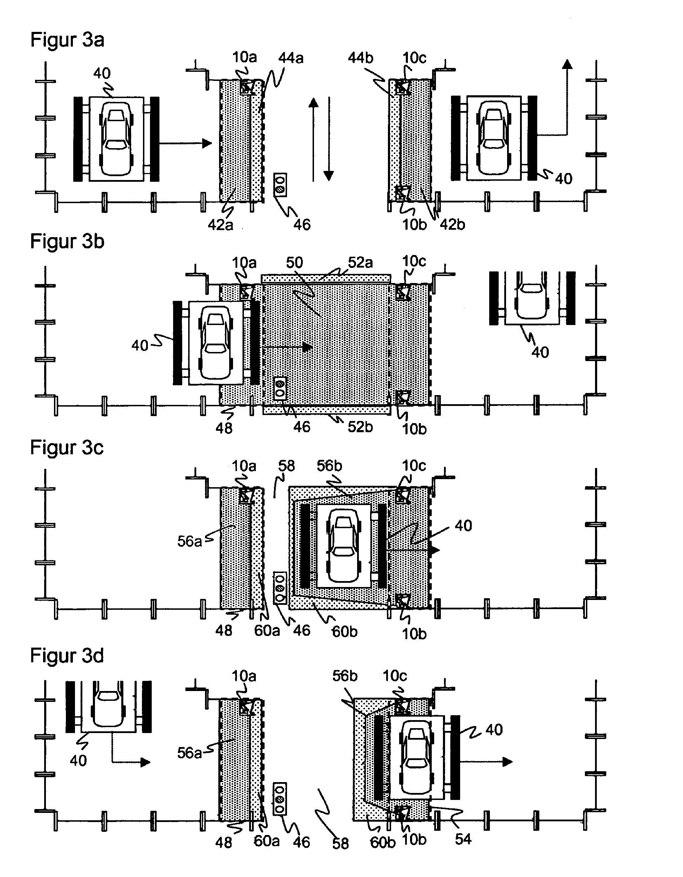

Figur 3 zeigt in einer ähnlichen Darstellung wie Figur 2 eine Ausführungsform der Erfindung, welche das ungefährliche rückwärtige Überqueren der Kreuzung hinter den Plattformen 40 und damit eine schnellere Nutzung des Übergangs ermöglicht. Die Figuren 3a und 3b entsprechen den Figuren 2a-b mit dem Unterschied, dass ein weiterer Sicherheitsscanner 10c an einer Ecke des Gefahrenbereichs angeordnet ist, um trotz Abschattungen hinreichend viele Daten zu gewinnen.

Während der Bewegung der Plattform 40 über die Kreuzung wird anstelle eines statischen Schutzfeldes 50 ein dynamisches Schutzfeld 56a-b verwendet, welches diskret oder kontinuierlich an die verfolgte Bewegung der Plattform 40 angepasst wird. Hat sich die Plattform 40 wie in Figur 3c schon ein Stück über die Kreuzung bewegt, so lässt das nun zweiteilige Schutzfeld 56a-b einen Freibereich 58, in dem Personen die Kreuzung hinter der Plattform 40 bereits wieder ungefährdet betreten können.

Ein statischer Teil 56a des Schutzfeldes 56a-b verhindert das Betreten des Eintrittsbereichs 48. Ein anderer dynamischer Teil 56b des Schutzfeldes 56a-b wird aus einem Trapez gebildet, wobei zwei Ecken durch die Positionen der Spiegelachsen der beiden Sicherheitsscanner 10b-c bestimmt werden. Die beiden anderen Ecken des Trapezes werden so bestimmt, dass der gefährliche Teil der Plattform 40 vollständig und bevorzugt mit Sicherheitszuschlägen umschlossen ist. Um diese Ecken zu ermitteln, wie die aktuelle Objektlage und das hinterlegte Objektmodell der Objektverfolgung der Plattform 40 verwendet. Das Trapez wird um einen statischen rechteckigen Anteil verlängert, der ein Betreten des Austrittsbereichs 54 unterbindet. Auch in dieser Phase sind den Schutzfeldern 56a-b bevorzugt Warnfelder 60a-b vorgelagert. Die Ampel steht auf gelb, um anzuzeigen, dass zwar der Übergang erlaubt ist, aber dabei auf die Plattform 40 zu achten ist.

Figur 3d zeigt die Situation, in der die Plattform 40 bereits den Austrittsbereich 54 erreicht hat. Der Freibereich 58 entspricht schon beinahe der gesamten Kreuzung. Sobald sich die Plattform 40 noch ein Stück weiterbewegt hat, ist die Kreuzung ganz freigegeben und die Ausgangssituation der Figur 3a erreicht, wobei die Schutzfeldauswertung wieder in den Anfangszustand zurückgesetzt und die Ampel auf grün geschaltet wird.

In Figur 4 ist ein Blockschaltbild einer übergeordneten Steuerung 62 zur Auswertung der Daten der Sicherheitsscanner 10a-c dargestellt. Die Sicherheitsscanner 10a-c liefern Scanlinien, also letztlich Abstandsprofile der Objekte in ihrer jeweiligen Scanebene, die einer Schutz- und Warnfeldauswertung 64 und einer Objektlagenermittlung 66 zugeführt werden. Dazu werden die Scanlinien zunächst in ein gemeinsames Koordinatensystem umgerechnet, so dass vorzugsweise ein vollständige Scanbild ohne Abschattungen entsteht.

Die Ermittlung der Objektlage der Plattform 40 in der Objektlagenermittlung 66 beginnt, sobald in dem Eintrittsbereich 48 eine Plattform 40 erkannt wurde. Mit jedem neuen Scanbild der Sicherheitsscanner 10a-c wird die Objektlage der Plattform 40, beispielsweise in den drei Parametern Position (x,y) und Orientierung (φ) neu ermittelt und die Plattform 40 somit von dem Eintrittsbereich 48 über die Kreuzung hinweg in den Austrittsbereich 54 verfolgt. Sobald die Plattform 40 den Überwachungsbereich der Sicherheitsscanner 10a-c vollständig verlassen hat, wird die Objektverfolgung beendet und eine neue Plattform 40 in dem Eintrittsbereich 48 gesucht.

Die so ermittelte Objektlage wird einerseits zur Weiterverarbeitung, etwa zu Test-und Anzeigezwecken, an Ausgängen 68a-b der Sicherheitssteuerung zur Verfügung gestellt. Andererseits wird die Objektlage an die Schutz- und Warnfeldauswertung 64 übermittelt. Dort werden Messpunkte ausgeblendet, die sich der Plattform 40 zuordnen lassen und ermittelt, ob nach dieser Ausblendung ein Objekteingriff in ein Schutzfeld oder ein Warnfeld erkannt wird. Bei Verletzung eines Warnfeldes wird eine Warnung an einem Ausgang 70 ausgegeben. Diese Warnung ist nicht sicherheitskritisch und der Ausgang 70 deshalb einkanalig.

Die sicherheitskritische Verletzung eines Schutzfeldes wird zweikanalig übertragen und antivalent an dem Sicherheitsausgang 72 ausgegeben. Dieser Sicherheitsausgang 72 ist ein OSSD, der dem Ausgang 32 des Sicherheitsscanners 10 der Figur 1 mit nur interner Auswertungseinheit 30 entspricht. Das Abschaltsignal wird nicht direkt auf den Sicherheitsausgang 72 gelegt, sondern noch mit einer internen Resetfunktion verrechnet, die zu einer Resetanforderung auf einem Ausgang 74 führen kann. Diese Resetfunktion dient dazu, dass eine qualifizierte Bedienperson mittels eines Resettasters 76 nach persönlicher Versicherung, dass die gefährlichen Bereiche rechts und links der Kreuzung frei sind, die Anlage neu hochfahren kann, beispielsweise nach einem Nothalt. Außerdem kann vorgesehen sein, das Abschaltsignal über eine UND-Verknüpfung 78 mit der Freigabe des Fördersystems zu verrechnen.

Die Schutz- und Warnfeldauswertung 64 steuert außerdem jeweils einen Ausgang 80 für das Fördersystem, um es jeweils anzuhalten und wieder freizugeben sowie einen oder mehrere Ausgänge 82 für die Ampel 46 an.

Figur 5 zeigt einen intern in der Schutz- und Warnfeldauswertung 64 verwendeten Zustandsautomaten für die in Figur 2 dargestellte Ausführungsform. Im Anfangszustand, der Figur 2a entspricht, hat die Objektlagenermittlung 66 keine Plattform 40 erkannt. Deshalb ist die Kreuzung zum Überqueren freigegeben und die Ampel 46 grün. Um zu verhindern, dass Menschen die gefährlichen Bereiche rechts und links der Kreuzung betreten, sind die beiden Übergabebereiche 48, 54 durch Schutzfelder 42a-b und Warnfelder 44a-b überwacht.

Wenn eine Plattform 40 in dem Eintrittsbereich 48 erkannt ist, wechselt entsprechend einem zweiten Zustand des Zustandsautomaten die Ampel 46 auf rot und dem Fördersystem wird die Weiterfahrt untersagt. Die Schutzfelder 42a-b und die Warnfelder 44ab werden beibehalten.

Sobald daraufhin die Sicherheitsscanner 10a-b keine Fremdobjekte in ihrem Überwachungsbereich 18 erkennen, wird das Fördersystem gemäß dem dritten Zustand des Zustandsautomaten wieder freigegeben und auf die Schutzfeldkonfiguration gemäß Figur 2b umgeschaltet. Das Schutzfeld 50 überdeckt die gesamte Kreuzung und untersagt das Überqueren, während die Warnfelder 52a-b vor unbeabsichtigtem Nothalt schützen.

Verlässt die Plattform 40 dann vollständig die Kreuzung oder den Austrittsbereich 54, wird die Schutzfeldauswertung wieder auf den Anfangszustand zurückgesetzt und die Ampel wechselt auf grün.

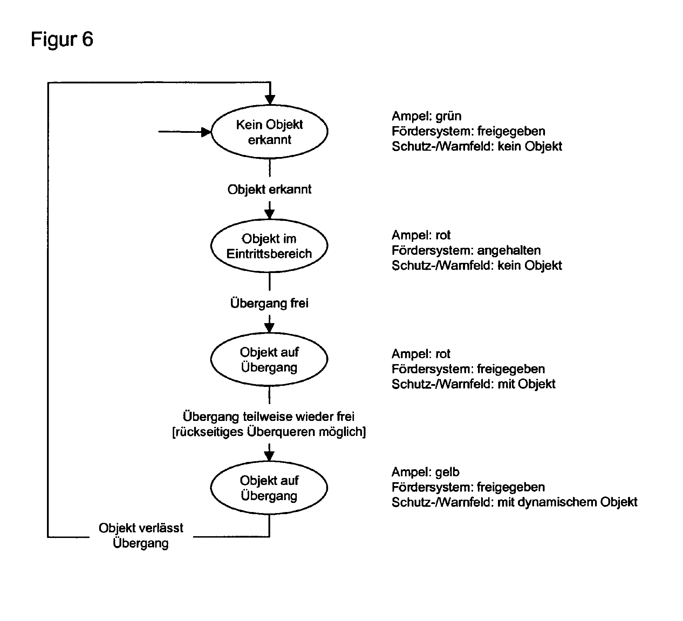

Figur 6 zeigt eine Abwandlung des in Figur 5 dargestellten Zustandsautomaten für die Ausführungsform gemäß Figur 3, welche ein Überqueren der Kreuzung hinter den Plattformen 40 gestattet. Der Zustandsautomat unterscheidet sich durch einen zusätzlichen vierten Zustand, in den gewechselt wird, sobald die Plattform 40 die Kreuzung teilweise freigegeben, beispielsweise den Eintrittsbereich 48 vollständig verlassen hat, um damit die dynamischen Schutzfelder 56a-b und zugehörigen Warnfelder 60a-b gemäß Figur 3c-d zu verwenden. In diesem Zustand wechselt die Ampel auf gelb und die Schutzfelder 56a-b werden dynamisch verkleinert, um rückwärtiges Überqueren zu ermöglichen.

Parallel zu der so beschriebenen Objektverfolgung und Umschaltung der Schutzfeldkonfigurationen wird stets auf unzulässige Objekteingriffe überwacht und gegebenenfalls die Sicherheitsfunktion ausgelöst.

Die Erfindung umfasst somit neben der Auswertung in einem einzelnen Sicherheitsscanner 10 auch eine gemeinsame Auswertung, bei der die gemessenen Entfernungswerte von mindestens zwei Sicherheitsscannern nicht direkt ausgewertet, sondem zunächst in ein gemeinsames Koordinatensystem umgerechnet werden. Im Anschluss werden dann alle Scanpunkte verworfen, die außerhalb des definierten Schutzfeldes liege, und in den nachfolgenden Auswerteschritten nicht weiter berücksichtigt.

Die gemessenen Scanpunkte, die innerhalb des Schutzfeldes liegen, führen dann nicht zwangsläufig zu einer Schutzfeldverletzung. Stattdessen wird jeder Scanpunkt klassifiziert, ob er zu einem bekannten Objekt, beispielsweise einer Plattform 40, gehört oder nicht. Dabei ist die Anwendung an einem Fördersystem nur beispielhaft zu verstehen, die Erfindung umfasst auch Ausführungsformen mit anderen verfolgten Objekten, beispielsweise Fahrzeugen, Paletten oder Bewegungen von Robotern als Ganzes oder von Roboterarmen.

Als Vorbereitung der Klassifikation wird das Modell der bekannten Objektausdehnung virtuell an die aktuelle Objektlage gesetzt. Liegt ein zu klassifizierender Scanpunkt in der Nähe der aktuellen Modell-Silhouette, so wird er als Objektpunkt klassifiziert. Ist der Scanpunkt jedoch weiter von den Modellumrissen entfernt als zum Beispiel eine bestimmte Maximaldistanz, so wird er als Fremdobjektpunkt klassifiziert.

Auch ein Fremdobjektpunkt stellt noch nicht unmittelbar eine Schutzfeldverletzung dar, wenn er beispielsweise zu klein oder nur temporär ist und eine Störung, wie ein Insekt, ein Regentropfen, Staub oder dergleichen die Ursache sein könnte. Abgesehen von derartigen Störunterdrückungen liegt aber eine Schutzfeldverletzung vor, sobald ein Fremdobjektpunkt gemessen wird. Es erfolgt eine sicherheitsgerichtete Abschaltung. Werden aber nur Scanpunkte gemessen, die als Objektpunkte klassifiziert sind, so werden diese Scanpunkte ausgeblendet und das Schutzfeld ist nicht verletzt.

## Patentansprüche

1. Anordnung mindestens zweier Sicherheitsscanner (10a-c) zur Absicherung eines Überwachungsbereichs (18), wobei die Sicherheitsscanner (10a-c) jeweils einen Lichtsender (12) zum Aussenden eines Lichtstrahls (14), eine Ablenkeinheit (16) zur periodischen Ablenkung des Lichtstrahls (14) in den Überwachungsbereich (18) und einen Lichtempfänger (24) zum Erzeugen von Empfangssignalen aus dem von Objekten in dem Überwachungsbereich (18) remittierten Lichtstrahl (20) aufweisen, und wobei eine Auswertungseinheit (30, 62, 64, 66) vorgesehen ist, die interne Auswertungseinheiten (30) der Sicherheitsscanner (10a-c) und/oder eine übergeordnete Auswertungseinheit (62, 64, 66) umfasst und die dafür ausgebildet ist, aus den Empfangssignalen der Sicherheitsscanner (10a-c) gewonnene Objektinformationen in ein gemeinsames Koordinatensystem umzurechnen, anhand der Empfangssignale Eingriffe in ein Schutzfeld innerhalb des Überwachungsbereichs (18) zu erkennen und daraufhin ein Absicherungssignal außer für den Fall bereitzustellen, dass der Eingriff einem erwarteten Gefährdungsobjekt (40) zugeordnet werden kann und das Gefährdungsobjekt (40) in dem Schutzfeld zu verfolgen oder zu erkennen und die Zuordnung von Eingriffen zu dem erwarteten Gefährdungsobjekt (40) anhand der Kontur und der aktuellen Position, Orientierung und/oder Geschwindigkeit des Gefährdungsobjekts (40) vorzunehmen,
**dadurch gekennzeichnet,**
**dass** die Sicherheitsscanner (10a-c) an einer Kreuzung eines Förderers und eines Übergangs angeordnet sind, wobei in einer ersten Schutzfeldkonfiguration das Schutzfeld (42a-b) an dem Eintrittsort (48) und dem Austrittsort (54) des Förderers vorgesehen ist, welches einen Freibereich für den Übergang offen lässt, und in einer zweiten Schutzfeldkonfiguration das Schutzfeld (50) den Übergang absichert.

2. Anordnung nach Anspruch 1,
wobei die Auswertungseinheit (30, 62, 64, 66) dafür ausgebildet ist, das Schutzfeld während der Bewegung des Gefährdungsobjekts (40) in dem Schutzfeld dynamisch anzupassen, insbesondere derart, dass das Gefährdungsobjekt (40) stets in allen Richtungen mit einem die Sicherheit gewährleistenden Schutzfeld umgeben ist.

3. Anordnung nach Anspruch 1 oder 2,
wobei die Auswertungseinheit (30, 62, 64, 66) dafür ausgebildet ist, das Schutzfeld in einer Gegenrichtung zu der Bewegungsrichtung des Gefährdungsobjekts (40) dynamisch zu verkleinern.

4. Anordnung nach einem der vorhergehenden Ansprüche,
wobei die Auswertungseinheit (30, 62, 64, 66) dafür ausgebildet ist, zwischen mehreren Schutzfeldkonfigurationen umzuschalten, die jeweils die Grenzen des Schutzfeldes innerhalb des Überwachungsbereichs (18) festlegen.

5. Anordnung nach Anspruch 4,
wobei die Auswertungseinheit (30, 62, 64, 66) dafür ausgebildet ist, eine Umschaltung der Schutzfeldkonfiguration vorzunehmen, wenn das Gefährdungsobjekt (40) in das Schutzfeld eintritt und/oder das Schutzfeld verlässt, wobei insbesondere die Schutzfeldkonfiguration vor dem Eintreten und nach dem Austreten des Gefährdungsobjekts (40) dieselbe ist.

6. Anordnung nach einem der vorhergehenden Ansprüche,
wobei die Auswertungseinheit (30, 62, 64, 66) dafür ausgebildet ist, das Gefährdungsobjekt (40) in dem Schutzfeld anhand von Kontur, Trajektorie innerhalb des Schutzfeldes und/oder dem Ort des Eindringens oder Verlassens des Schutzfeldes zu erkennen.

7. Anordnung nach einem der vorhergehenden Ansprüche,
wobei die Auswertungseinheit (30, 62, 64, 66) dafür ausgebildet ist, in dem Überwachungsbereich (18) mindestens einen der folgenden Teilbereiche vorzusehen:
- ein dem Schutzfeld vorgelagertes Wamfeld, in dem vor einer Absicherung zunächst eine Warnung erfolgt,
- einen Freibereich, in dem jegliche Eingriffe erlaubt sind und/oder
- einen Eintritts- und einen Austrittsbereich, in dem das Gefährdungsobjekt in das Schutzfeld eindringt oder das Schutzfeld verlässt.

8. Anordnung nach einem der vorhergehenden Ansprüche,
wobei die Sicherheitsscanner (10a-c) dieselbe Scanebene überwachen, insbesondere eine horizontale Scanebene in Höhe einer Transportplattform (40) oder von deren Sockel.

9. Anordnung nach einem der vorhergehenden Ansprüche,
wobei in der zweiten Schutzfeldkonfiguration das Schutzfeld (50) den gesamten Übergang umfasst, oder wobei das Schutzfeld (56) dynamisch mit fortschreitender Bewegung des Gefährdungsobjekts (40) den Freibereich (58) hinter dem Gefährdungsobjekt (40) zunehmend wieder offen lässt.

10. Anordnung nach einem der vorhergehenden Ansprüche,
wobei das Gefährdungsobjekt ein Fördererelement (40) oder ein von dem Förderer bewegtes Objekt ist, und wobei die Auswertungseinheit (30, 62, 64, 66) im Grundzustand die erste Schutzfeldkonfiguration verwendet, auf die zweite Schutzfeldkonfiguration umschaltet, wenn das Gefährdungsobjekt (40) sich der Kreuzung nähert, und auf die erste Schutzfeldkonfiguration zurückschaltet, wenn das Gefährdungsobjekt (40) die Kreuzung verlassen hat.

11. Verfahren zur Absicherung eines Überwachungsbereichs (18), wobei mittels mehrerer Sicherheitsscanner (10a-c) Eingriffe in ein Schutzfeld innerhalb des Überwachungsbereichs (18) erkannt werden und daraufhin ein Absicherungssignal außer für den Fall bereitgestellt wird, dass der Eingriff einem erwarteten Gefährdungsobjekt (40) zugeordnet werden kann,wobei das Gefährdungsobjekt (40) in dem Schutzfeld verfolgt oder erkannt wird und die Zuordnung von Eingriffen zu dem erwarteten Gefährdungsobjekt (40) anhand der Kontur und der aktuellen Position, Orientierung und/oder Geschwindigkeit des Gefährdungsobjekts (40) erfolgt,
**dadurch gekennzeichnet,**
**dass** die Sicherheitsscanner (10a-c) an einer Kreuzung eines Förderers und eines Übergangs angeordnet werden, wobei in einer ersten Schutzfeldkonfiguration das Schutzfeld (42) an dem Eintrittsort und dem Austrittsort des Förderers vorgesehen ist, welches einen Freibereich für den Übergang offen lässt, und in einer zweiten Schutzfeldkonfiguration das Schutzfeld (50, 56) den Übergang absichert.

12. Verfahren nach Anspruch 11,
wobei das Schutzfeld (56) während der Bewegung des Gefährdungsobjekts (40) in dem Schutzfeld (56) dynamisch angepasst wird, insbesondere derart, dass das Gefährdungsobjekt (40) stets in allen Richtungen mit einem die Sicherheit gewährleistenden Schutzfeld (56) umgeben ist, oder wobei das Schutzfeld (56) in einer Gegenrichtung zu der Bewegungsrichtung des Gefährdungsobjekts (40) dynamisch verkleinert wird und/oder wobei zwischen mehreren Schutzfeldkonfigurationen umgeschaltet wird, die jeweils die Grenzen des Schutzfeldes innerhalb des Überwachungsbereichs (18) festlegen, insbesondere jeweils eine Umschaltung erfolgt, wenn das Gefährdungsobjekt (40) in das Schutzfeld eintritt und/oder das Schutzfeld verlässt.

13. Verfahren nach Anspruch 11 oder 12,
wobei das Schutzfeld (50) in der zweiten Schutzfeldkonfiguration den gesamten Übergang umfasst oder das Schutzfeld (56)) in der zweiten Schutzfeldkonfiguration dynamisch mit fortschreitender Bewegung des Gefährdungsobjekts (40) den Freibereich (58) hinter dem Gefährdungsobjekt wieder offen lässt, wobei insbesondere das Gefährdungsobjekt ein Fördererelement (40) oder ein von dem Förderer bewegtes Objekt ist, und von einem Grundzustand mit der ersten Schutzfeldkonfiguration auf die zweite Schutzfeldkonfiguration umgeschaltet wird, wenn das Gefährdungsobjekt (40) sich der Kreuzung nähert, und auf die erste Schutzfeldkonfiguration zurückschaltet wird, wenn das Gefährdungsobjekt (40) die Kreuzung verlassen hat.

## Claims

1. An arrangement of at least two safety scanners (10a-c) for securing a monitored zone (18), wherein each safety scanner (10a-c) has a light transmitter (12) for transmitting a light beam (14), a deflection unit (16) for the periodic deflection of the light beam (14) into the monitored zone (18) and a light receiver (24) for generating received signals from the light beam (20) remitted by objects in the monitored zone (18), and wherein an evaluation unit (30, 62, 64, 66) is provided comprising internal evaluation units (30) of the safety scanners (10a-c) and/or a higher level evaluation unit (62, 64, 66) and being configured to recalculate the object information acquired from the received signals of the safety scanners (10a-c) into a common coordinate system, to recognize intrusions into a protected field within the monitored zone (18) with reference to the received signals and thereupon to provide a securing signal, except for the case that the intrusion can be associated with an expected dangerous object (40), and to track or to recognize the dangerous object (40) in the protected field and to carry out the association of intrusions with the expected dangerous object (40) with reference to the contour and to the current position, orientation and/or speed of the dangerous object (40),
**characterized in that**
the safety scanners (10a-c) are arranged at an intersection of a conveyor and of a crossing, wherein, in a first protected field configuration, the protected field (42a-b) is provided at the entry location (48) and at the exit location (54) of the conveyor and leaves a free zone open for the crossing and, in a second protected field configuration, the protected field (50) secures the crossing.

2. The arrangement in accordance with claim 1,
wherein the evaluation unit (30, 62, 64, 66) is configured to dynamically adapt the protected field during the movement of the dangerous object (40) in the protected field, in particular such that the dangerous object (40) is always surrounded in all directions by a protected field ensuring safety.

3. The arrangement in accordance with claim 1 or 2,
wherein the evaluation unit (30, 62, 64, 66) is configured to dynamically reduce the protected field in size in a counter-direction to the direction of movement of the dangerous object (40).

4. The arrangement in accordance with any of the preceding claims,
wherein the evaluation unit (30, 62, 64, 66) is configured to switch over between a plurality of protected field configurations which each fix the boundaries of the protected field within the monitored zone (18).

5. The arrangement in accordance with claim 4,
wherein the evaluation unit (30, 62, 64, 66) is configured to carry out a switchover of the protected field configuration when the dangerous object (40) enters into the protected field and/or exits the protective field, wherein in particular the protected field configuration is the same before the entry and after the exit of the dangerous object (40).

6. The arrangement in accordance with any of the preceding claims,
wherein the evaluation unit (30, 62, 64, 66) is configured to recognize the dangerous object (40) in the protected field with reference to the contour, to the trajectory within the protected field and/or to the location of the intrusion or exiting of the protected field.

7. The arrangement in accordance with any of the preceding claims,
wherein the evaluation unit (30, 62, 64, 66) is configured to provide at least one of the following part zones in the monitored zone (18):
- a warning field which is situated before the protected field and in which a warning takes place before a securing;
- a free zone in which all intrusions are allowed; and/or
- an entry zone and an exit zone in which the dangerous object intrudes into the protected field or exits the protected field.

8. The arrangement in accordance with any of the preceding claims,
wherein the safety scanners (10a-c) monitor the same scanning plane, in particular a horizontal scanning plane at the level of a transport platform (40) or of its base.

9. The arrangement in accordance with any of the preceding claims,
wherein, in the second protected field configuration, the protected field (50) comprises the entire crossing; or wherein the protected field (56) dynamically leaves the free zone (58) behind the dangerous object (40) increasingly open again as the movement of the dangerous object (40) progresses.

10. The arrangement in accordance with any of the preceding claims,
wherein the dangerous object is a conveyor element (40) or an object moved by the conveyor; and wherein the evaluation unit (30, 62, 64, 66) uses the first protected field configuration in the base state, switches over to the second protected field configuration when the dangerous object (40) approaches the intersection and switches back over to the first protected field configuration when the dangerous object (40) has exited the intersection.

11. A method for securing a monitored zone (18), wherein intrusions into a protected field within the monitored zone (18) are recognized by means of multiple safety scanners (10a-c) and a securing signal is thereupon provided, except for the case that the intrusion can be associated with an expected dangerous object (40), wherein the dangerous object (40) is tracked or recognized in the protected field and the association of intrusions to the expected dangerous object (40) takes place with reference to the contour and to the current position, orientation and/or speed of the dangerous object (40),
**characterized in that**
the safety scanners (10a-c) are arranged at an intersection of a conveyor and of a crossing, wherein, in a first protected field configuration, the protected field (42a-b) is provided at the entry location (48) and at the exit location (54) of the conveyor and leaves a free zone open for the crossing and, in a second protected field configuration, the protected field (50) secures the crossing.

12. The method in accordance with claim 11,
wherein the protected field (56) is dynamically adapted during the movement of the dangerous object (40) in the protected field (56), in particular such that the dangerous object (40) is always surrounded in all directions by a protected field (56) ensuring safety; or wherein the protected field (56) is dynamically reduced in size in a counter-direction to the direction of movement of the dangerous object (40); and/or wherein a switchover is made between a plurality of protected field configurations which each fix the boundaries of the protected field within the monitored zone (18), with a respective switchover in particular taking place when the dangerous object (40) enters into the protected field (40) and/or exits the protected field.

13. A method in accordance with claim 11 or 12,
wherein the protected field (50) in the second protected field configuration comprises the entire crossing or the protected field in the second protected field dynamically leaves the free zone (38) behind the dangerous object open again as the movement of the dangerous object (40) progresses; wherein the dangerous object is in particular a conveyor element (40) or an object moved by the conveyor, and a switchover is made from a base state having the first protected field configuration to the second protected field configuration when the dangerous object (40) approaches the intersection and a switchover back to the first protected field configuration is made when the dangerous object (40) has exited the intersection.

## Revendications

1. Agencement d'au moins deux scanners de sécurité (10a-c) pour la sécurisation d'une zone de surveillance (18), dans lequel les scanners de sécurité (10a-c) comprennent chacun un émetteur de lumière (12) pour émettre un rayon de lumière (14), une unité de déviation (16) pour dévier périodiquement le rayon de lumière (14) vers la zone de surveillance (18) et un récepteur de lumière (24) pour générer des signaux de réception à partir du rayon de lumière (20) réémis par des objets dans la zone de surveillance (18), et dans lequel il est prévu une unité d'évaluation (30, 62, 64, 66), qui comprend des unités d'évaluation internes (30) des scanners de sécurité (10a-c) et/ou une unité d'évaluation maître (62, 64, 66), et qui est réalisée pour convertir par calcul des informations d'objets obtenues à partir des signaux de réception des scanners de sécurité (10a-c) dans un système de coordonnées commun, pour reconnaître au moyen des signaux de réception des interventions dans un champ de protection à l'intérieur de la zone de surveillance (18), et pour mettre ensuite à disposition un signal de sécurisation, à l'exception du cas où l'intervention peut être associée à un objet menaçant prévu (40) et pour suivre ou reconnaître l'objet menaçant (40) dans le champ de protection, et pour procéder à l'association d'interventions vis-à-vis de l'objet menaçant prévu (40) en s'aidant du contour et de la position, l'orientation et/ou la vitesse actuelle de l'objet menaçant (40),
**caractérisé en ce que**
les scanners de sécurité (10a-c) sont agencés au croisement d'un convoyeur et d'un passage supérieur, le champ de protection (42a-b) étant prévu, dans une première configuration, au niveau de l'emplacement d'entrée (48) et de l'emplacement de sortie (54) du convoyeur, lequel laisse ouvert une zone libre pour le passage supérieur, et dans une seconde configuration, le champ de protection (50) sécurise le passage supérieur.

2. Agencement selon la revendication 1,
dans lequel l'unité d'évaluation (30, 62, 64, 66) est réalisée pour adapter de façon dynamique le champ de protection pendant le mouvement de l'objet menaçant (40) dans le champ de protection, en particulier de telle manière que l'objet menaçant (40) soit toujours entouré dans toutes les directions par un champ de protection garantissant la sécurité.

3. Agencement selon la revendication 1 ou 2,
dans lequel l'unité d'évaluation (30, 62, 64, 66) est réalisée pour rétrécir de façon dynamique le champ de protection dans une direction opposée à la direction de déplacement de l'objet menaçant (40).

4. Agencement selon l'une des revendications précédentes,
dans lequel l'unité d'évaluation (30, 62, 64, 76) est réalisée pour commuter entre plusieurs configurations du champ de protection, qui déterminent respectivement les frontières du champ de protection à l'intérieur de la zone de surveillance (18).

5. Agencement selon la revendication 4,
dans lequel l'unité d'évaluation (30, 62, 64, 66) est réalisée pour procéder à une commutation de la configuration du champ de protection quand l'objet menaçant (40) pénètre dans le champ de protection et/ou quitte le champ de protection, et la configuration du champ de protection est en particulier la même avant l'entrée et après la sortie de l'objet menaçant (40).

6. Agencement selon l'une des revendications précédentes,
dans lequel l'unité d'évaluation (30, 62, 64, 66) est réalisée pour reconnaître l'objet menaçant (40) dans le champ de protection au moyen du contour, de la trajectoire à l'intérieur du champ de protection et/ou du lieu de la pénétration ou de la sortie du champ de protection.

7. Agencement selon l'une des revendications précédentes,
dans lequel l'unité d'évaluation (30, 62, 64, 66) est réalisée de manière à prévoir, dans la zone de surveillance (18), l'une au moins des zones partielles suivantes :
- un champ d'avertissement en avant du champ de protection, dans lequel se produit tout d'abord un avertissement avant une sécurisation,
- une zone libre dans laquelle toute intervention est permise, et/ou
- une zone d'entrée et une zone de sortie dans lesquelles l'objet menaçant pénètre dans le champ de protection ou quitte le champ de protection.

8. Agencement selon l'une des revendications précédentes,
dans lequel les scanners de sécurité (10a-c) surveillent le même plan de scannage, en particulier un plan de scannage horizontal à la hauteur d'une plate-forme de transport (40) ou de son socle.

9. Agencement selon l'une des revendications précédentes,
dans lequel le champ de protection (50) englobe, dans la seconde configuration, la totalité du passage supérieur, ou dans lequel le champ de protection (56) laisse à nouveau progressivement ouverte la zone libre (58) derrière l'objet menaçant (40) de façon dynamique lors de la progression du mouvement de l'objet menaçant (40).

10. Agencement selon l'une des revendications précédentes,
dans lequel l'objet menaçant est un élément de convoyeur (40) ou un objet déplacé par le convoyeur, et dans lequel l'unité d'évaluation (30, 62, 64, 66) utilise dans la situation de base la première configuration du champ de protection et commute vers la seconde configuration du champ de protection quand l'objet menaçant (40) s'approche du croisement, et commute en retour vers la seconde configuration du champ de protection quand l'objet menaçant (40) a quitté le croisement.

11. Procédé pour la sécurisation d'une zone de surveillance (18), dans lequel au moyen de plusieurs scanners de sécurité (10a-c) on reconnaît des interventions dans le champ de protection à l'intérieur de la zone de surveillance (18) et on met ensuite à disposition un signal de sécurisation à l'exception du cas où l'intervention peut être associée à un objet menaçant attendu (40), dans lequel l'objet menaçant (40) est suivi ou reconnu dans le champ de protection et l'association d'interventions vis-à-vis de l'objet menaçant attendu (40) a lieu au moyen du contour et de la position, de l'orientation et/ou de la vitesse actuelle de l'objet menaçant (40),
**caractérisé en ce que**
les scanners de sécurité (10a-c) sont agencés à un croisement d'un convoyeur et d'un passage supérieur, de sorte que le champ de protection (42) est prévu, dans une première configuration, à l'emplacement d'entrée et à l'emplacement de sortie du convoyeur, ce qui laisse ouvert une zone libre pour le passage supérieur, et le champ de protection (50, 56), dans une seconde configuration, sécurise le passage supérieur.

12. Procédé selon la revendication 11, dans lequel le champ de protection (56) est adapté de façon dynamique pendant le mouvement de l'objet menaçant (40) dans le champ de protection (56), en particulier de telle manière que l'objet menaçant (40) est toujours entouré dans toutes les directions avec un champ de protection (56) qui garantit la sécurité, ou dans lequel le champ de protection (56) est rétréci de façon dynamique dans une direction opposée à la direction de déplacement de l'objet menaçant (40) et/ou dans lequel on procède à une commutation entre plusieurs configurations du champ de protection, qui déterminent respectivement les frontières du champ de protection à l'intérieur de la zone de surveillance (18), et en particulier de manière qu'une commutation se produit chaque fois que l'objet menaçant (40) pénètre dans le champ de protection et/ou quitte le champ de protection.

13. Procédé selon la revendication 11 ou 12,
dans lequel le champ de protection (50) englobe dans la seconde configuration la totalité du passage supérieur, ou le champ de protection (56) laisse à nouveau ouverte la zone libre (58) derrière l'objet menaçant de façon dynamique lors de la progression du mouvement de l'objet menaçant (40), dans lequel l'objet menaçant est en particulier un élément de convoyeur (40) ou un objet déplacé par le convoyeur, et on procède à une commutation depuis un état de base avec la première configuration du champ de protection vers la seconde configuration quand l'objet menaçant (40) s'approche du croisement, et on commute en retour vers la première configuration du champ de protection quand l'objet menaçant (40) a quitté le croisement.
